# EUROPÄISCHE PATENTANMELDUNG

(11) **EP 4 011 703 A1**
(43) Veröffentlichungstag der Anmeldung: **15.06.2022**
(21) Anmeldenummer: 20213376.5
(22) Anmeldetag: 11.12.2020
(51) Int. Cl.: B60Q 1/076, B60Q 1/068

(54) **EINSTELLVORRICHTUNG ZUR EINSTELLUNG VON ZUMINDEST ZWEI OPTISCH RELEVANTEN BAUEINHEITEN EINES KRAFTFAHRZEUGSCHEINWERFERS**

(71) Anmelder: ZKW Group GmbH, 3250 Wieselburg (AT)
(72) Erfinder: Steinkellner, Johann, 3684 St. Oswald (AT)
(74) Vertreter: Patentanwaltskanzlei Matschnig & Forsthuber OG

(57) **Zusammenfassung**

Einstellvorrichtung (10) zur Einstellung von zumindest zwei optisch relevanten Baueinheiten eines Kraftfahrzeugscheinwerfers, welche Einstellvorrichtung (10) Folgendes umfasst:
- zumindest zwei Tragerahmen (100, 200)
- ein Montagebauteil (300), an welchem die zumindest zwei Tragerahmen (100, 200) jeweils um eine Horizontalachse (H1, H2) und eine Vertikalachse (V1, V2) verschwenkbar gelagert sind,
- eine Vertikal-Verschwenkeinrichtung (400) zum gleichzeitigen Verschwenken der zumindest zwei Tragerahmen (100, 200) um deren Horizontalachsen (H1, H2), welche ein erstes Kopplungselement (410) und eine erste Antriebsvorrichtung (420) mit einem in eine erste Verschubachse (A1) linear verstellbaren Stellarm (421) umfasst, wobei der Stellarm (421) an dem ersten Kopplungselement (410) angreift und in Richtung der ersten Verschubachse (A1) antreibt,
- eine Horizontal-Verschwenkeinrichtung (500) zum gleichzeitigen Verschwenken der zumindest zwei Tragerahmen (100, 200) um deren Vertikalachsen (V1, V2), welche ein zweites Kopplungselement (510) und eine zweite Antriebsvorrichtung (520) mit einem in eine zweite Verschubachse (A2) linear verstellbaren Stellarm (521) umfasst, wobei der Stellarm (521) an dem zweiten Kopplungselement (510) angreift und in Richtung der zweiten Verschubachse (A2) antreibt, wobei jeder Tragerahmen (100, 200) ein Verstelldreieck (D1, D2) aufweist, welche in einer Grundstellung der Tragerahmen (100, 200) in einer Horizontalebene angeordnet ist, und wobei bei einem Verschwenken der Tragerahmen (100, 200) aus der Grundstellung durch die Vertikal- Verschwenkeinrichtung (400) und/oder die Horizontal-Verschwenkeinrichtung (500) die Verstelldreiecke der Tragerahmen (100, 200) weiterhin in zueinander parallelen Ebenen liegen.

## Beschreibung

Die Erfindung betrifft eine Einstellvorrichtung zur Einstellung von zumindest zwei optisch relevanten Baueinheiten eines Kraftfahrzeugscheinwerfers, welche Einstellvorrichtung Folgendes umfasst:
- zumindest zwei Tragerahmen, welche jeweils eingerichtet sind, zumindest eine optisch relevante Baueinheit, beispielsweise ein Lichtmodul, zu tragen,
- ein Montagebauteil, an welchem die zumindest zwei Tragerahmen jeweils um eine Horizontalachse und eine Vertikalachse verschwenkbar gelagert sind,
- eine Vertikal-Verschwenkeinrichtung zum gleichzeitigen Verschwenken der zumindest zwei Tragerahmen um deren Horizontalachsen, wobei die Vertikal-Verschwenkeinrichtung hierzu ein erstes Kopplungselement und eine erste Antriebsvorrichtung mit einem in eine erste Verschubachse linear verstellbaren Stellarm umfasst, wobei das erste Kopplungselement gelenkig mit den zumindest zwei Tragerahmen verbunden ist, und wobei der Stellarm der ersten Antriebseinrichtung an dem ersten Kopplungselement angreift und in Richtung der ersten Verschubachse antreibt, sodass bei einem Verstellen des ersten Kopplungselements in Richtung der ersten Verschubachse die zumindest zwei Tragerahmen gleichzeitig um ihre jeweiligen Horizontalachsen in gleicher Richtung verschwenkbar sind,
- eine Horizontal-Verschwenkeinrichtung zum gleichzeitigen Verschwenken der zumindest zwei Tragerahmen um deren Vertikalachsen, wobei die Horizontal-Verschwenkeinrichtung hierzu ein zweites Kopplungselement und eine zweite Antriebsvorrichtung mit einem in eine zweite Verschubachse linear verstellbaren Stellarm umfasst, wobei das zweite Kopplungselement gelenkig mit den zumindest zwei Tragerahmen verbunden ist, und wobei der Stellarm der zweiten Antriebseinrichtung an dem zweiten Kopplungselement angreift und in Richtung der zweiten Verschubachse antreibt, sodass bei einem Verstellen des zweiten Kopplungselements in Richtung der zweiten Verschubachse die zumindest zwei Tragerahmen gleichzeitig um ihre jeweiligen Vertikalachsen in gleicher Richtung verschwenkbar sind.

Ferner betrifft die Erfindung eine Beleuchtungsvorrichtung mit zumindest einer erfindungsgemäßen Einstellvorrichtung, wobei die Beleuchtungsvorrichtung Lichtmodule mit jeweils einem Körperschwerpunkt umfasst, und wobei auf einem Tragerahmen jeweils ein Lichtmodul angeordnet ist, wobei der Körperschwerpunkt jedes Lichtmoduls in Einbaulage der Beleuchtungsvorrichtung über dem jeweiligen Fixpunktlager des entsprechenden Tragerahmens angeordnet ist.

Ferner betrifft die Erfindung einen Kraftfahrzeugscheinwerfer mit zumindest einer erfindungsgemäßen Einstellvorrichtung oder mit zumindest einer erfindungsgemäßen Beleuchtungsvorrichtung.

Einstellsysteme sind aus dem Stand der Technik bekannt und werden bei Kraftfahrzeugscheinwerfern häufig eingesetzt, um die vertikale Auslenkung (beispielsweise Leuchtweitenregulierung) oder die horizontale Auslenkung (Grundeinstellung oder beispielsweise Kurvenlicht) einer Lichtverteilung einzustellen.

Zur gesetzeskonformen Einstellung des mit einem Kraftfahrzeugscheinwerfer erzeugten Lichtbildes ist es notwendig, dass ein oder mehrere optisch relevante Baueinheiten des Scheinwerfers unter anderem in Höhenrichtung und/oder seitlich einstellbar sind. Bei einer solchen relevanten optischen Baueinheit handelt es sich beispielsweise um ein Lichtmodul, etwa bestehend aus zumindest einer Lichtquelle, zumindest einem Reflektor, zumindest einer Linse etc.; es kann sich aber auch um einzelne Bauteile wie Reflektoren, Linsen etc. handeln, die entsprechend verstellt werden.

Dabei ist die zumindest eine optisch relevante Baueinheit häufig um eine oder mehrere Achsen, beispielsweise um eine horizontale und/oder vertikale Achse verschwenkbar in dem Scheinwerfer gelagert. Beispielsweise sind eine oder mehrere Lichtmodule an einem Tragerahmen gelagert, und der Tragerahmen ist um eine oder zwei Achsen, wie vorstehend beschrieben, verschwenkbar gelagert.

Einstellsysteme sollen einerseits eine zuverlässige Verstellung eines relevanten Bauteils ermöglichen, andererseits soll der Platzbedarf solcher Einstellsysteme minimiert werden, um die Konzeption eines Kraftfahrzeugscheinwerfers möglichst wenig einzuschränken. Einstellvorrichtungen zur Einstellung von optisch relevanten Baueinheiten von Kraftfahrzeugscheinwerfern, wie beispielsweise Lichtquellen, Reflektoren und/oder Linsen, erlauben eine Anpassung des durch den Scheinwerfer erzeugten Lichtbildes an vorgegebene Anforderungen. Dies erlaubt es, dass Abweichungen von Sollvorgaben, die beispielsweise nach einem Einbauvorgang des Scheinwerfers in ein Kraftfahrzeug festgestellt werden, nachträglich durch Verwendung einer Einstellvorrichtung ausgeglichen werden können.

Eine typische Aufgabe von Einstellvorrichtungen liegt in der Anpassung der Leuchtweite eines Scheinwerfers, wobei dieses technische Gebiet insbesondere unter dem Ausdruck "Leuchtweitenregulierung" - kurz LWR genannt - bekannt geworden ist.

Zur Verstellung ist in der Regel zumindest eine Antriebseinrichtung vorgesehen, wobei die Antriebseinrichtung üblicherweise manuell betätigbar ist. Beispielsweise umfasst die Antriebseinrichtung ein Drehrad bzw. eine Einstellschraube, deren Drehbewegung über eine geeignete Mechanik in eine Linearbewegung eines Gleitelements umgesetzt wird, welches in entsprechenden Gleitbahnen in dem Scheinwerfergehäuse verschiebbar geführt ist. Ein Verstellpunkt der optisch relevanten Baueinheit, z.B. des Tragerahmens, an welchem die Baueinheit angebracht ist, ist in dem Gleitelement gelagert, sodass bei einem Verschieben des Gleitelements die Baueinheit bzw. der Tragerahmen verschwenkt werden.

Es ist eine Aufgabe der Erfindung eine verbesserte Einstellvorrichtung bereitzustellen.

Diese Aufgabe wird dadurch gelöst, dass jeder Tragerahmen ein Verstelldreieck aufweist, welches jeweils durch ein Fixpunktlager und ein erstes und ein zweites Einstellpunktlager gebildet ist, wobei die Tragerahmen mittels dem jeweiligen Fixpunktlager gelenkig an dem Montagebauteil angeordnet sind, und wobei das erste Kopplungselement an den ersten Einstellpunklagern und das zweite Kopplungselement an den zweiten Einstellpunktlagern angreift, und wobei das Verstelldreieck jedes Tragerahmens in einer Grundstellung der Tragerahmen in einer Horizontalebene angeordnet ist, und wobei bei einem Verschwenken der Tragerahmen aus der Grundstellung durch die Vertikal- Verschwenkeinrichtung und/oder die Horizontal-Verschwenkeinrichtung die Verstelldreiecke der Tragerahmen weiterhin in zueinander parallelen Ebenen liegen.

Dadurch kann der Bauraumbedarf gegenüber bisher bekannten Lösungen verringert werden bzw. variabler gestaltet werden. Dies ist insbesondere bei aktuellen Scheinwerfern von Vorteil, da durch immer höhere Anforderungen von Seiten des Fahrzeugdesigns, umgebender Technik und Funktionen sowie zusätzlicher Technik im Scheinwerfer der vorhandene Bauraum immer besser genutzt werden muss.

Es sei angemerkt, dass sich Begriffe wie "horizontal", "Horizontalebene", "vertikal", "orthogonal", "oben" oder "unten" auf eine in einen Kraftfahrzeugscheinwerfer korrekt bzw. ordnungsgemäße eingebaute Einstellvorrichtung bzw. Beleuchtungseinrichtung beziehen, welcher Kraftfahrzeugscheinwerfer sich in Einbaulage in einem Kraftfahrzeug befindet.

Es sei angemerkt, dass die Vertikalachsen der Tragerahmen in der Grundstellung der Tragerahmen und in Einbaulage der Einstellvorrichtung vertikal angeordnet sind, wobei bei einem Verstellen bzw. Verschwenken der Tragerahmen um die jeweiligen Horizontalachsen die Vertikalachsen der Tragerahmen nicht mehr genau vertikal stehen und ihre Ausrichtung verändert haben, wobei in diesem Zusammenhang weiterhin von Vertikalachsen der Tragerahmen gesprochen wird. Ferner sei angemerkt, dass die Vertikalachsen jeweils immer orthogonal auf das Verstelldreieck des entsprechenden Tragerahmens sind unabhängig von der Verstellung der Tragerahmen selbst.

Es kann vorgesehen sein, dass die erste Verschubachse orthogonal zu der jeweiligen Horizontalebene der Verstelldreiecke der Tragerahmen in der Grundstellung angeordnet ist, und wobei die zweite Verschubachse orthogonal zur ersten Verschubachse angeordnet ist.

Es kann vorgesehen sein, dass die zumindest zwei Tragerahmen mit jeweils einem Fixpunktlager an dem Montagebauteil gelagert sind, wobei das Fixpunktlager als Kugelgelenk ausgebildet ist.

Es kann vorgesehen sein, dass das erste und/oder das zweite Kopplungselement gleitend geführt an dem Montagebauteil angeordnet sind.

Es kann vorgesehen sein, dass die erste Verschubachse eine vertikal stehende Achse ist.

Es kann vorgesehen sein, dass die zweite Verschubachse eine horizontal liegende Achse ist.

Es kann vorgesehen sein, dass das Montagbauteil als Kraftfahrzeugscheinwerfergehäuse ausgebildet ist.

Es kann vorgesehen sein, dass das erste und das zweite Kopplungselement als starre Körper ausgebildet sind.

Es kann vorgesehen sein, dass die zumindest zwei Tragerahmen baugleich ausgebildet sind.

Es kann vorgesehen sein, dass die Verstelldreiecke der zumindest zwei Tragerahmen in unterschiedlichen Horizontalebenen angeordnet sind.

Es kann vorgesehen sein, dass die erste und die zweite Antriebsvorrichtung als Stellmotoren ausgebildet sind.

Es kann vorgesehen sein, dass die Einstellvorrichtung genau zwei Tragerahmen umfasst.

Die Aufgabe wird ebenso gelöst durch eine Beleuchtungsvorrichtung mit zumindest einer erfindungsgemäßen Einstellvorrichtung, wobei die Beleuchtungsvorrichtung Lichtmodule mit jeweils einem Körperschwerpunkt umfasst, und wobei auf einem Tragerahmen jeweils ein Lichtmodul angeordnet ist, wobei der Körperschwerpunkt jedes Lichtmoduls in Einbaulage der Beleuchtungsvorrichtung über dem jeweiligen Fixpunktlager des entsprechenden Tragerahmens angeordnet ist.

Dadurch liegt der Tragerahmen aufgrund seines Eigengewichts derart auf dem Fixpunktlager bzw. der Einstellvorrichtung auf, dass kein Spiel in dem System vorhanden ist bzw. die jeweiligen "Aktuatoren" der Einstellvorrichtung vorbelastet sind. Dadurch können Toleranzketten innerhalb des Systems verkleinert bzw. verringert werden, sodass die Einstellvorrichtung insgesamt genauer ist bzw. die zumindest eine optisch relevante Baueinheit feiner justierbar ist.

Die Aufgabe wird ebenso gelöst durch einen Kraftfahrzeugscheinwerfer mit zumindest einer erfindungsgemäßen Einstellvorrichtung oder mit zumindest einer erfindungsgemäßen Beleuchtungsvorrichtung.

Nachfolgend wird die Erfindung anhand von beispielhaften Zeichnungen näher erläutert. Hierbei zeigt
Fig. 1 eine perspektivische Ansicht von schräg oben einer beispielhaften Einstellvorrichtung, und
Fig. 2 eine perspektivische Ansicht der beispielhaften Einstellvorrichtung aus Fig. 1 von schräg unten.

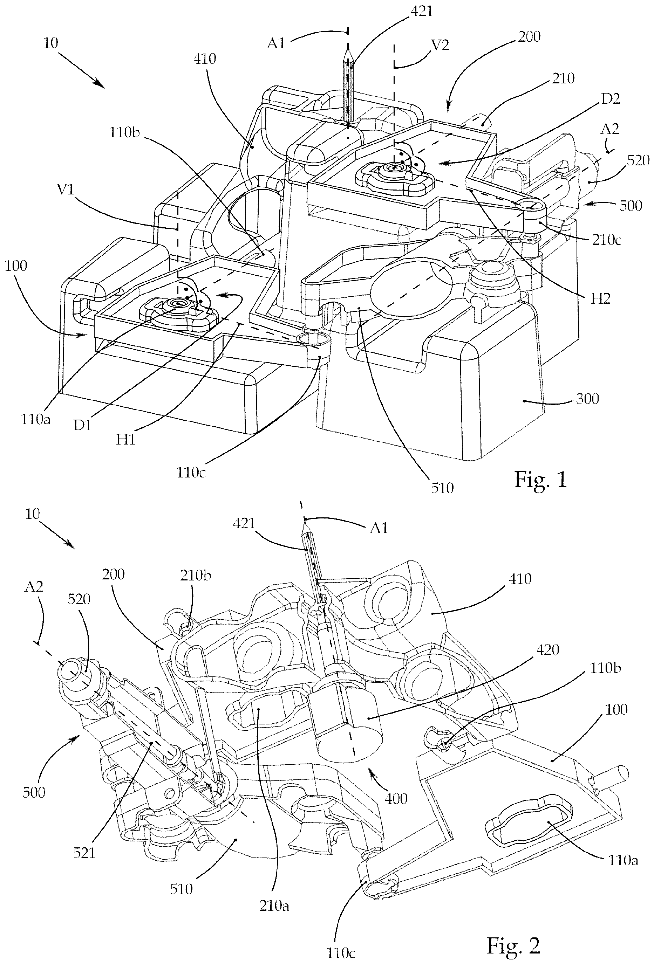

Fig. 1 zeigt eine beispielhafte Einstellvorrichtung 10 zur Einstellung von zumindest zwei optisch relevanten Baueinheiten eines Kraftfahrzeugscheinwerfers, welche Einstellvorrichtung **10** zwei im Wesentlichen baugleiche Tragerahmen **100, 200** umfasst, welche jeweils eingerichtet sind, zumindest eine optisch relevante Baueinheit, beispielsweise ein Lichtmodul, zu tragen. Die optisch relevanten Baueinheiten bzw. Lichtmodule zur besseren Übersichtlichkeit nicht in den Figuren eingezeichnet.

Ferner umfasst die Einstellvorrichtung **10** ein Montagebauteil **300,** an welchem die zwei Tragerahmen **100, 200** jeweils um eine Horizontalachse **H1, H2** und eine Vertikalachse **V1,** V2 verschwenkbar gelagert sind.

Zusätzlich weist die Einstellvorrichtung **10** eine Vertikal-Verschwenkeinrichtung 400 zum gleichzeitigen Verschwenken der zwei Tragerahmen **100, 200** um deren Horizontalachsen **H1, H2** auf, wobei die Vertikal-Verschwenkeinrichtung **400** hierzu ein erstes Kopplungselement **410** und eine erste als Stellmotor ausgebildete Antriebsvorrichtung **420** mit einem in eine erste Verschubachse **A1** linear verstellbaren Stellarm **421** umfasst. Die Vertikal-Verschwenkeinrichtung **400** ist in der Rückansicht der Einstellvorrichtung **10** in **Fig.** 2 besser zu sehen.

Das erste Kopplungselement **410** ist dabei gelenkig mit den zwei Tragerahmen **100, 200** verbunden, wobei der Stellarm **421** der ersten Antriebseinrichtung **420** an dem ersten Kopplungselement **410** angreift und in Richtung der ersten Verschubachse **A1** antreibt, sodass bei einem Verstellen des ersten Kopplungselements **410** in Richtung der ersten Verschubachse **A1** die zwei Tragerahmen **100, 200** gleichzeitig um ihre jeweiligen Horizontalachsen **H1, H2** in gleicher Richtung verschwenkbar sind.

Weiters umfasst die Einstellvorrichtung **10** eine Horizontal-Verschwenkeinrichtung **500** zum gleichzeitigen Verschwenken der zwei Tragerahmen **100, 200** um deren Vertikalachsen **V1, V2,** wobei die Horizontal-Verschwenkeinrichtung **500** hierzu ein zweites Kopplungselement **510** und eine zweite als Stellmotor ausgebildete Antriebsvorrichtung **520** mit einem in eine zweite Verschubachse **A2** linear verstellbaren Stellarm **521** umfasst.

Das zweite Kopplungselement **510** ist dabei gelenkig mit den zwei Tragerahmen **100, 200** verbunden, wobei der Stellarm **521** der zweiten Antriebseinrichtung **520** an dem zweiten Kopplungselement **510** angreift und in Richtung der zweiten Verschubachse **A2** antreibt, sodass bei einem Verstellen des zweiten Kopplungselements **510** in Richtung der zweiten Verschubachse **A2** die zwei Tragerahmen **100, 200** gleichzeitig um ihre jeweiligen Vertikalachsen **V1, V2** in gleicher Richtung verschwenkbar sind.

Es sei angemerkt, dass sowohl das erste Kopplungselement **410** als auch das zweite Kopplungselement **510** als starre Körper ausgebildet sind, sodass eine Bewegung des entsprechenden Stellarmes **421, 521** unmittelbar durch die Kopplungselemente **410, 510** umgesetzt wird. Ferner sind die Kopplungselemente **410, 510** leitend geführt an dem Montagbauteil **300** angeordnet.

Darüber hinaus weist jeder Tragerahmen **100, 200** ein Verstelldreieck **D1, D2** auf, welches jeweils durch ein Fixpunktlager **110a, 210a** und ein erstes und ein zweites Einstellpunktlager **110b, 210b, 110c, 210c** gebildet ist, wobei die Tragerahmen **100, 200** mittels dem jeweiligen Fixpunktlager **110a, 210a** gelenkig an dem Montagebauteil 300 angeordnet sind. Die Fixpunktlager **110a, 210a** sowie die ersten und zweiten Einstellpunktlager **110b, 210b, 110c, 210c** sind jeweils als Kugelgelenk mit den entsprechenden Koppelelementen **410, 510** und Montagebauteil **300** ausgebildet.

Das erste Kopplungselement **410** greift an den ersten Einstellpunklagern **110b, 210b** und das zweite Kopplungselement **510** greift an den zweiten Einstellpunktlagern **110c, 210c** an, wobei das Verstelldreieck **D1, D2** jedes Tragerahmens **100, 200** in einer Grundstellung der Tragerahmen **100, 200** in einer Horizontalebene angeordnet ist, wobei die Verstelldreiecke **D1, D2** in unterschiedlichen Horizontalebenen liegen, wie in **Fig. 1** zu sehen ist.

Bei einem Verschwenken der Tragerahmen **100, 200** aus der Grundstellung durch die Vertikal- Verschwenkeinrichtung **400** und/oder die Horizontal-Verschwenkeinrichtung **500** liegen die Verstelldreiecke **D1, D2** der Tragerahmen **100, 200** weiterhin in zueinander parallelen Ebenen.

Ferner ist im gezeigten Beispiel die erste Verschubachse **A1** der Vertikal-Verschwenkvorrichtung **400** orthogonal zu der jeweiligen Horizontalebene der Verstelldreiecke **D1, D2** der Tragerahmen **100, 200** in der Grundstellung angeordnet, wobei die zweite Verschubachse **A2** der Horizontal-Verschwenkeinrichtung **500** orthogonal zur ersten Verschubachse **A1** angeordnet ist, unabhängig von der Verschwenkung bzw. Verstellung der Tragerahmen **100, 200.**

Die erste Verschubachse **A1** ist dabei in ordnungsgemäßer Einbaulage der Einstellvorrichtung **10** eine vertikal stehende Achse, wobei die zweite Verschubachse **A2** in ordnungsgemäßer Einbaulage der Einstellvorrichtung **10** eine horizontal liegende Achse ist.

Wie bereits eingangs erwähnt, sind auf den Tragerahmen **100, 200** optisch relevante Bauteile, beispielsweise Lichtmodule angeordnet, welche jedoch in den Figuren nicht eingezeichnet sind. Die Lichtmodule weisen dabei jeweils einen Körperschwerpunkt auf, wobei auf einem Tragerahmen **100, 200** jeweils ein Lichtmodul angeordnet ist, und wobei der Körperschwerpunkt jedes Lichtmoduls in Einbaulage der Einstellvorrichtung über dem jeweiligen Fixpunktlager **110a, 210a** des entsprechenden Tragerahmens **100, 200** angeordnet ist.

**LISTE DER BEZUGSZEICHEN**

| | |
|---|---|
| Einstellvorrichtung... | 10 |
| Tragerahmen... | 100, 200 |
| Fixpunktlager... | 110a, 210a |
| Erstes Einstellpunktlager... | 110b, 210b |
| Zweites Einstellpunktlager... | 110c, 210c |
| Montagebauteil... | 300 |
| Vertikal-Verschwenkeinrichtung... | 400 |
| Erstes Kopplungselement... | 410 |
| Erste Antriebsvorrichtung... | 420 |
| Stellelement... | 421 |
| Horizontal-Verschwenkeinrichtung... | 500 |
| Zweites Kopplungselement... | 510 |
| Zweite Antriebsvorrichtung... | 520 |
| Stellelement... | 521 |
| Horizontalachsen... | H1, H2 |
| Vertikalachsen... | V1, V2 |
| Erste Verschubachse... | A1 |
| Zweite Verschubachse... | A2 |
| Verstelldreieck... | D1, D2 |

## Patentansprüche

1. Einstellvorrichtung (10) zur Einstellung von zumindest zwei optisch relevanten Baueinheiten eines Kraftfahrzeugscheinwerfers, welche Einstellvorrichtung (10) Folgendes umfasst:
- zumindest zwei Tragerahmen (100, 200), welche jeweils eingerichtet sind, zumindest eine optisch relevante Baueinheit, beispielsweise ein Lichtmodul, zu tragen,
- ein Montagebauteil (300), an welchem die zumindest zwei Tragerahmen (100, 200) jeweils um eine Horizontalachse (H1, H2) und eine Vertikalachse (V1, V2) verschwenkbar gelagert sind,
- eine Vertikal-Verschwenkeinrichtung (400) zum gleichzeitigen Verschwenken der zumindest zwei Tragerahmen (100, 200) um deren Horizontalachsen (H1, H2), wobei die Vertikal-Verschwenkeinrichtung (400) hierzu ein erstes Kopplungselement (410) und eine erste Antriebsvorrichtung (420) mit einem in eine erste Verschubachse (A1) linear verstellbaren Stellarm (421) umfasst, wobei das erste Kopplungselement (410) gelenkig mit den zumindest zwei Tragerahmen (100, 200) verbunden ist, und wobei der Stellarm (421) der ersten Antriebseinrichtung (420) an dem ersten Kopplungselement (410) angreift und in Richtung der ersten Verschubachse (A1) antreibt, sodass bei einem Verstellen des ersten Kopplungselements (410) in Richtung der ersten Verschubachse (A1) die zumindest zwei Tragerahmen (100, 200) gleichzeitig um ihre jeweiligen Horizontalachsen (H1, H2) in gleicher Richtung verschwenkbar sind,
- eine Horizontal-Verschwenkeinrichtung (500) zum gleichzeitigen Verschwenken der zumindest zwei Tragerahmen (100, 200) um deren Vertikalachsen (V1, V2), wobei die Horizontal-Verschwenkeinrichtung (500) hierzu ein zweites Kopplungselement (510) und eine zweite Antriebsvorrichtung (520) mit einem in eine zweite Verschubachse (A2) linear verstellbaren Stellarm (521) umfasst, wobei das zweite Kopplungselement (510) gelenkig mit den zumindest zwei Tragerahmen (100, 200) verbunden ist, und wobei der Stellarm (521) der zweiten Antriebseinrichtung (520) an dem zweiten Kopplungselement (510) angreift und in Richtung der zweiten Verschubachse (A2) antreibt, sodass bei einem Verstellen des zweiten Kopplungselements (510) in Richtung der zweiten Verschubachse (A2) die zumindest zwei Tragerahmen (100, 200) gleichzeitig um ihre jeweiligen Vertikalachsen (V1, V2) in gleicher Richtung verschwenkbar sind,
**dadurch gekennzeichnet, dass**
jeder Tragerahmen (100, 200) ein Verstelldreieck (D1, D2) aufweist, welches jeweils durch ein Fixpunktlager (110a, 210a) und ein erstes und ein zweites Einstellpunktlager (110b, 210b, 110c, 210c) gebildet ist, wobei die Tragerahmen (100, 200) mittels dem jeweiligen Fixpunktlager (110a, 210a) gelenkig an dem Montagebauteil (300) angeordnet sind, und wobei das erste Kopplungselement (410) an den ersten Einstellpunklagern (110b, 210b) und das zweite Kopplungselement (510) an den zweiten Einstellpunktlagern (110c, 210c) angreift, und wobei das Verstelldreieck (D1, D2) jedes Tragerahmens (100, 200) in einer Grundstellung der Tragerahmen (100, 200) in einer Horizontalebene angeordnet ist, und wobei bei einem Verschwenken der Tragerahmen (100, 200) aus der Grundstellung durch die Vertikal- Verschwenkeinrichtung (400) und/oder die Horizontal-Verschwenkeinrichtung (500) die Verstelldreiecke der Tragerahmen (100, 200) weiterhin in zueinander parallelen Ebenen liegen.

2. Einstellvorrichtung nach Anspruch 1, **dadurch gekennzeichnet, dass** die erste Verschubachse (A1) orthogonal zu der jeweiligen Horizontalebene der Verstelldreiecke (D1, D2) der Tragerahmen (100, 200) in der Grundstellung angeordnet ist, und wobei die zweite Verschubachse (A2) orthogonal zur ersten Verschubachse (A1) angeordnet ist.

3. Einstellvorrichtung nach Anspruch 1 oder 2, **dadurch gekennzeichnet, dass** die Fixpunktlager (110a, 210a) als Kugelgelenk ausgebildet sind.

4. Einstellvorrichtung nach einem der Ansprüche 1 bis 3, **dadurch gekennzeichnet, dass** das erste und/oder das zweite Kopplungselement (410, 510) gleitend geführt an dem Montagebauteil (300) angeordnet sind.

5. Einstellvorrichtung nach einem der Ansprüche 1 bis 4, **dadurch gekennzeichnet, dass** die erste Verschubachse (A1) in Einbaulage der Einstellvorrichtung (10) eine vertikal stehende Achse ist.

6. Einstellvorrichtung nach einem der Ansprüche 1 bis 5, **dadurch gekennzeichnet, dass** die zweite Verschubachse (A2) in Einbaulage der Einstellvorrichtung (10) eine horizontal liegende Achse ist.

7. Einstellvorrichtung nach einem der Ansprüche 1 bis 6, **dadurch gekennzeichnet, dass** das Montagbauteil (300) als Kraftfahrzeugscheinwerfergehäuse ausgebildet ist.

8. Einstellvorrichtung nach einem der Ansprüche 1 bis 7, **dadurch gekennzeichnet, dass** das erste und das zweite Kopplungselement (410, 510) als starre Körper ausgebildet sind.

9. Einstellvorrichtung nach einem der Ansprüche 1 bis 8, **dadurch gekennzeichnet, dass** die zumindest zwei Tragerahmen (100, 200) baugleich ausgebildet sind.

10. Einstellvorrichtung nach einem der Ansprüche 1 bis 9, **dadurch gekennzeichnet, dass** die Verstelldreiecke (D1, D2) der zumindest zwei Tragerahmen (100, 200) in der Grundstellung in unterschiedlichen Horizontalebenen angeordnet sind.

11. Einstellvorrichtung nach einem der Ansprüche 1 bis 10, **dadurch gekennzeichnet, dass** die erste und die zweite Antriebsvorrichtung (420, 520) als Stellmotoren ausgebildet sind.

12. Einstellvorrichtung nach einem der Ansprüche 1 bis 11, **dadurch gekennzeichnet, dass** die Einstellvorrichtung genau zwei Tragerahmen (100, 200) umfasst.

13. Beleuchtungsvorrichtung mit zumindest einer Einstellvorrichtung (10) nach einem der Ansprüche 1 bis 12, wobei die Beleuchtungsvorrichtung Lichtmodule mit jeweils einem Körperschwerpunkt umfasst, und wobei auf einem Tragerahmen (100, 200) jeweils ein Lichtmodul angeordnet ist, wobei der Körperschwerpunkt jedes Lichtmoduls in Einbaulage der Beleuchtungsvorrichtung über dem jeweiligen Fixpunktlager (110a, 210a) des entsprechenden Tragerahmens (100, 200) angeordnet ist.

14. Kraftfahrzeugscheinwerfer mit zumindest einer Einstellvorrichtung (10) nach einem der Ansprüche 1 bis 12 oder mit zumindest einer Beleuchtungsvorrichtung nach Anspruch 13.
